# EUROPEAN PATENT SPECIFICATION

(11) **EP 2 776 283 B1**
(45) Date of publication and mention of the grant of the patent: **03.08.2016**
(21) Application number: 12847547.2
(22) Date of filing: 07.11.2012
(51) Int. Cl.: G01D 11/30, B60R 11/04, B60R 11/00

(54) **FASTENING DEVICE FOR DETECTOR MEANS**
BEFESTIGUNGSVORRICHTUNG FÜR DETEKTOR
DISPOSITIF DE FIXATION POUR MOYENS FORMANT DÉTECTEURS

(30) Priority: 09.11.2011 SE 1151054
(43) Date of publication of application: 17.09.2014
(73) Proprietor: Scania CV AB, 151 87 Södertälje (SE)
(72) Inventor: ZHOUSON, Samuel, SE-141 30 Huddinge (SE)
(74) Representative: Scania CV AB
(86) International application number: PCT/SE2012/051210
(87) International publication number: WO 2013/070158

(56) References cited:
- EP-A1- 1 625 976
- EP-A2- 2 407 350
- DE-A1- 10 354 458
- DE-A1- 10 354 458
- DE-A1- 19 804 165
- US-A- 4 836 482
- US-A- 4 836 482
- US-A- 5 695 164
- US-A1- 2004 028 239

## Description

### TECHNICAL FIELD

The invention relates to a fastening device for detector means according to the preamble of claim 1. The invention relates also to a motor vehicle.

### BACKGROUND

Detectors are now widely used, e.g. in motor vehicles, for monitoring of various kinds. It is desirable such a detector be firmly fastened. In certain cases it needs to be pre-adjustable and/or post-adjustable so that its position/direction can be regulated to suit its particular location. There are for example various current applications in which a detector in the form of a camera is fitted in a vehicle's front window, e.g. to detect and identify objects such as unprotected road-users in the path of the vehicle.

Such a camera is preferably fitted on the inside of the vehicle's front window to protect it from external interference. A problem with having cameras on the inside is that vehicle front windows vary in slope and height, so the angle of the camera relative to the front window will vary depending on the configuration of the front window.

DE 10 354 458 A1 discloses a fastering device for support of detector means according to the preamble of claim 1.

Fitting detector means in the form of cameras on front windows which differ in slope and/or height therefore involves using a camera fastening device which comprises a fastening element appropriate to the specific slope/height of the front window and suited to being fastened by adhesion/bonding to the inside of the front window, the correct angle for the camera being achieved by the configuration of the fastening element. A problem with such a solution is that it requires a plurality of different fastening elements/fastening devices. If a fastening element/fastening device intended for a certain front window is fitted to a different front window to which it is not suited, the fastening element/fastening device has to be removed and replaced, which is time-consuming and entails having to scrap the fastening element removed.

### OBJECT OF THE INVENTION

An object of the present invention is to propose a fastening device for detector means which makes it easy to adjust the detector means and fastens it firmly so that there is no risk of its position changing.

### SUMMARY OF THE INVENTION

This and other objects indicated by the description set out below are achieved by a fastening device and a motor vehicle of the kind indicated in the introduction which further present the features indicated in the respective characterising parts of the attached independent claims 1 and 10. Preferred embodiments of the fastening device are defined in the attached dependent claims 2-9.

According to the invention, the objects are achieved with a fastening device for support of detector means comprising a fastening element for applying the fastening device, comprising a retaining means suited to supporting said detector means, such that the retaining means and the fastening element are arranged to be mutually settable and a locking configuration is provided for their mutual locking in set mutual positions. Easy adjustment and firm fastening of the detector means are thus made possible.

Both the fastening element and the retaining means are provided with positioning means suited to cooperating in order to define said mutual positions, and either the retaining means or the fastening element is provided with resilient positioning means for said cooperation. Easy adjustment and locking of the detector means in desired positions is thus made possible.

Furthermore, the locking configuration of the fastening device comprises a locking means arranged to prevent said resilient positioning means from springing out. Easy and effective locking of the detector means in desired positions is thus made possible.

According to an embodiment of the fastening device, said cooperation is arranged to take place between respective protruding portions and recesses on said positioning means. Easy and effective adjustment and locking of the detector means is thus made possible.

According to an embodiment of the fastening device, said resilient positioning means are borne by said fastening element or said retaining means. Adjustment and locking by means of few parts is thus made possible, resulting in simple construction.

According to an embodiment of the fastening device, said retaining means is turnable about a pivot axis towards and away from said fastening element to set said retaining means in different angular positions relative to said fastening element. Simple adjustment and adaptation for fastening of detector means such as cameras to a sloping surface such as the inside of a front window of a vehicle is thus made possible.

According to an embodiment of the fastening device, at least one resilient positioning means is arranged protrudingly from a platelike portion of the fastening element transversely to said pivot axis, comprising a plurality of protruding portions or recesses distributed along the positioning means for cooperation with corresponding protruding portions or recesses on at least one rigid positioning means of the retaining means. Easy construction and easy fitting of the fastening device and easy adjustment and locking in desired positions of detector means such as cameras are thus made possible.

According to an embodiment of the fastening device, said retaining means is turnable about a pivot axis which runs towards a platelike portion of the fastening element, at least one resilient positioning means runs in the circumferential direction of the fastening element and at least one rigid positioning means runs in the circumferential direction of the retaining means. Said retaining means bears protruding portions or recesses distributed in the circumferential direction. Pivotable adjustment and locking of the retaining means in the same plane as the fastening element is thus made possible. The detector means may be arranged to detect at right angles to this plane or in one or more intermediate radial directions.

According to an embodiment of the fastening device, said retaining means is movable along the platelike portion of the fastening element, at least one resilient positioning means runs along the fastening element in the direction of movement of the retaining means and at least one rigid positioning means runs along the retaining means in its direction of movement, which positioning means bear protruding portions or recesses distributed in said direction of movement. Linear adjustment and locking of the detector means in the same plane as the fastening element is thus made possible.

According to an embodiment of the fastening device, said locking means is comprised by a protective housing portion of the fastening element. This makes it possible to incorporate the detector means in such a way that it is protected from interference and unintentional adjustment when in an applied state.

According to an embodiment of the fastening device there are necessary viewing apertures for said detector means when the fastening device is in an applied state. This makes compact construction possible in that the detector means/camera can detect through the structure. This makes it possible to incorporate the detector means/camera in such a way that it is protected from interference and unintentional adjustment.

### DESCRIPTION OF DRAWINGS

The present invention will be better understood by reading the detailed description set out below in conjunction with the attached drawings, in which the same reference notations refer to similar items throughout the various views and
Fig. 1 is a schematic sideview of a motor vehicle,
Figs. 2a-c are schematic perspective views of parts of a fastening device for detector means, e.g. a camera, according to an embodiment of the present invention,
Fig. 3a is a schematic perspective view of the fastening device in Figs. 2a-c when partly assembled,
Fig. 3b is a schematic perspective view of the fastening device in Figs. 2a-c when fully assembled,
Figs. 4a-c are schematic perspective views of the fastening device with an outer portion partly removed,
Figs. 5a-c are schematic perspective views of parts of a fastening device for detector means according to an embodiment of the present invention,
Figs. 6a-b are schematic perspective views of parts of the fastening device in assembled/partly assembled states,
Figs. 7a-c are schematic perspective views of parts of a fastening device for detector means according to an embodiment of the present invention, and
Figs. 8a-b are schematic perspective views of parts of the fastening device in assembled/partly assembled states.

### DESCRIPTION OF EMBODIMENTS

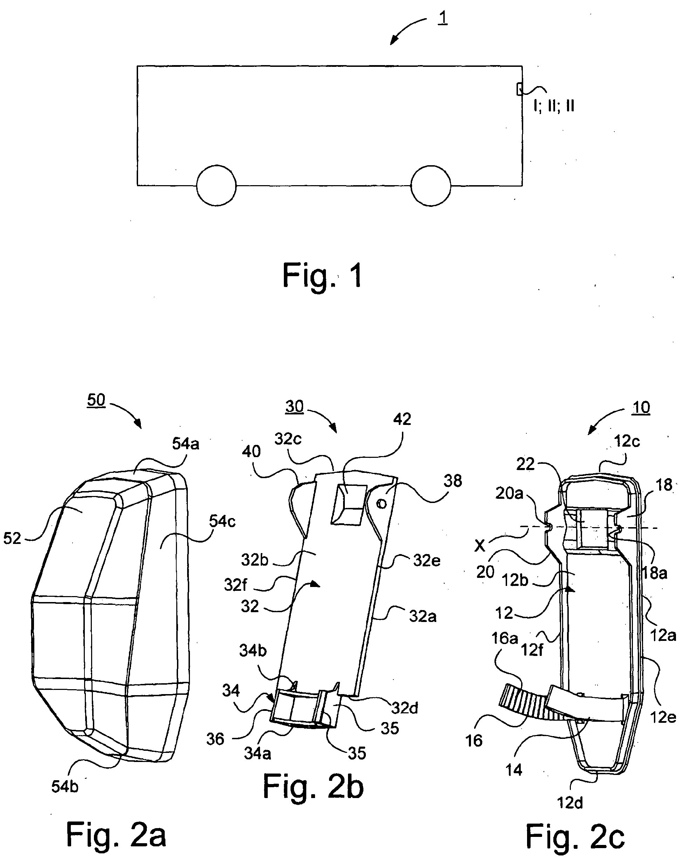

Figure 1 depicts a side view of a vehicle 1. The vehicle exemplified is a heavy vehicle in the form of a bus. It might alternatively be a truck or a car. It is provided with a fastening device for detector means according to the present invention.

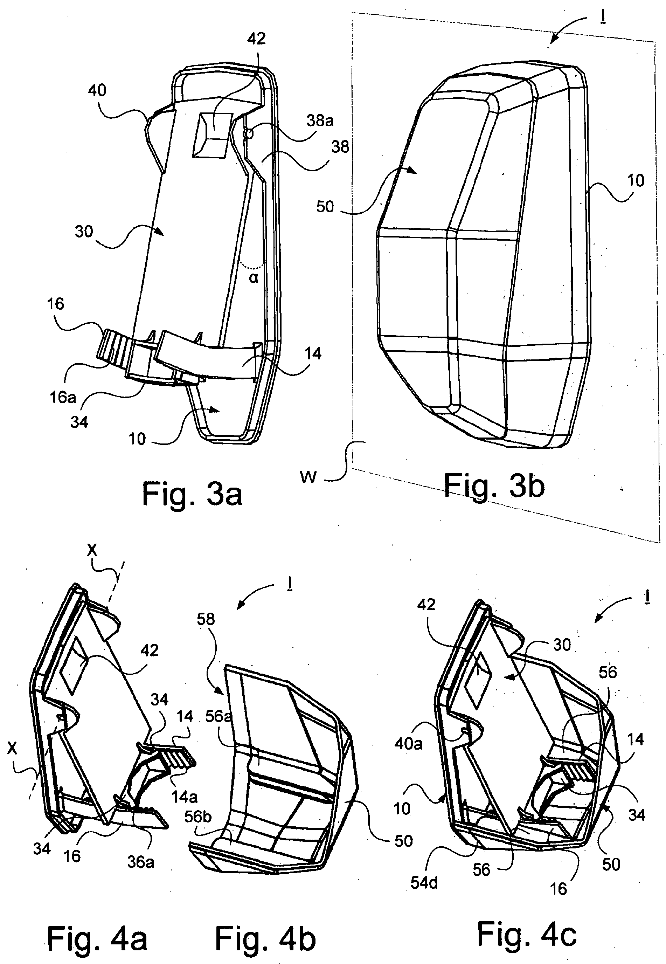

Figs. 2a-c are schematic perspective views of parts of a fastening device for detector means, e.g. a camera, according to an embodiment of the present invention, Fig. 3a a schematic perspective view of the parts of the fastening device I in Figs. 2a-c when partly assembled, Fig. 3b a schematic perspective view of the fastening device I in Figs. 2a-c when fully assembled and Figs. 4a-c schematic perspective views of the fastening device with an outer portion partly removed.

The fastening device I for support of detector means.comprises a fastening element 10 for applying it. This fastening element is intended to be fastened on a fastening surface W which in one variant takes the form of the inside of a front window of a vehicle.

The fastening element 10 has a platelike portion with a first side 12a suited to being fastened to a fastening surface W such as the inside of a vehicle front window. It further has a second side 12b which is opposite to the first side.

The platelike portion 12 is of substantially oblong shape. It has a first end or first short side 12c which ends a first end region, an opposite second end or second short side 12d which ends a second end region, a first long side 12e and a second long side 12f which runs opposite to, parallel with and at a distance from the first long side, which first and second long sides 12e, 12f and first and second short sides 12c, 12d form an edge portion running round the fastening element 10.

The fastening element 10 comprises first and second resilient positioning means 14, 16, the first 14 situated in the second end region close to the first long side 12e, and the second 16 in the second end region close to the second long side 12f. These first and second resilient positioning means are situated opposite one another.

The first and second resilient positioning means 14, 16 are arranged protrudingly from said platelike portion and have a plurality of protruding portions or recesses 14a, 16a distributed along them.

The respective resilient positioning means 14, 16 are arranged to protrude arcuately from, and to run at right angles from, the platelike portion 12, curving in said arcuate shape towards the first end region.

Each of the resilient positioning means 14, 16 has an external side and an internal side, and their respective internal sides face one another. Said protruding portions or recesses 14a, 16a are situated on the internal side of the respective resilient positioning means and in this variant take the form of grooves/elevations with a sawtooth profile which run transversely to the longitudinal extent of the respective positioning means.

Each resilient positioning means 14, 16 is arranged to flex or spring in a direction which is transverse to the longitudinal extent of the fastening element 10, i.e. in a direction towards and away from the opposite resilient positioning means 16, 14.

The fastening element 10 comprises first and second supporting portions 18, 20, the first 18 situated in the first end region close to the first long side 12e, and the second 20 in the first end region close to the second long side 12f. These first and second supporting portions are situated opposite one another.

The first and second supporting portions 18, 20 are arranged protrudingly from the platelike portion 12. The first 18 has in an upper portion a recess 18a, and the second 20 has in an upper portion a corresponding recess 20a opposite to the recess in the first supporting portion 18, forming a notional pivot axis X between them. These first and second supporting portions are arranged to accommodate via said recesses 18a, 20a a retaining means 30 described below to make pivoting possible about said pivot axis X.

The fastening element 10 has in the first end region a viewing aperture 22 for said detector means. This viewing aperture is thus intended for the detector means, e.g. a camera, and the detector means is intended, when the fastening device I is applied, to be so directed that it can detect through said aperture.

The fastening device I further comprises a retaining means 30 arranged to support said detector means.

The retaining means 30 has a platelike portion 32 with a first side 32a and a second side 32b which is opposite to the first side.

The platelike portion 32 is of substantially oblong shape. It has a first end or first short side 32c which ends a first end region, an opposite second end or second short side 32d which ends a second end region, a first long side 32e and a second long side 32f which runs opposite to, parallel with and at a distance from the first long side.

The retaining means 30 comprises a rigid positioning means 34 situated close to, and extending from, the second short side 32d as a continuation of the platelike portion 32. The rigid positioning means 34 has a first portion 35 which runs transversely to the platelike portion 32 in the longitudinal extent of the fastening device I, with an external side which has a protruding portion or protrusion 35a, and a corresponding second portion 36 which runs transversely to the platelike portion and parallel with and at a distance from the first portion 35, with an external side which has a corresponding protruding portion or protrusion 36a and faces away from the external side of the first portion 35. The respective protrusions 35a, 36a are arranged to run in the longitudinal extent of the retaining means 30. The rigid positioning means 34 has bracing portions 34a, 34b between said first and second portions 35, 36 to prevent their flexing/springing.

The retaining means 30 comprises a first rotation portion 38 and a second rotation portion 40, the first 38 situated in the first end region close to the first long side 32e, and the second 40 in the first end region close to the second long side 32f. These first and second rotation portions are situated opposite one another.

The first and second rotation portions 38, 40 are arranged protrudingly from the platelike portion 32. The first 38 has in an upper region a pivot pin 38a protruding at right angles from the side, and the second 40 has in an upper region a pivot pin 40a protruding at right angles from the side, for pivoting of the retaining means 30 about the pivot axis X constituted by said pivot pins 38a, 40a. Said pivot pins are intended to be placed in said recesses 18a, 20a in the support portions 18, 20 of the fastening element 10 to allow said pivoting of the retaining means 30 about the pivot axis X.

The retaining means 30 has in the first end region a viewing aperture 42 for said detector means. This viewing aperture is thus intended for the detector means, e.g. a camera, and the detector means is intended, when the fastening device I is applied, to be so directed that it can detect through said aperture.

Said rigid positioning means 34 of the retaining means 30 is arranged to cooperate with said resilient positioning means 14, 16 of the fastening element 10 so that the retaining means is settable to mutual positions relative to the fastening element. Said retaining means is thus pivotable about said pivot axis X towards and away from said fastening element to set it in different angular positions relative to said fastening element.

Said rigid positioning means 34 of the retaining means 30 is therefore so arranged that said external sides of the respective portions 35, 36 face towards said internal sides of said respective resilient positioning means 14, 16 so that the protrusion 35a, 36a on the respective external side of the retaining means 30 is put into engagement with the corresponding recess 14a, 16a of the respective resilient positioning means 14, 16 to achieve set positions.

Each resilient positioning means 14, 16 is adapted to flexing/springing when the retaining means 30 is turned about the pivot axis X, allowing said rigid positioning means 34 to change position because the respective protrusion 35a, 36a pushes the respective resilient positioning means out so that the protrusion can move to desired positions for desired angles of the retaining means 30 for desired directions of detection.

The fastening device I comprises a housing portion 50 adapted to accommodating said detector means. The housing portion is thus arranged to enclose said retaining means 30 and said fastening element 10. It has a roof portion 52 and wall portions 54a, 54b, 54c, 54d forming an aperture 58 opposite to the roof portion, and the roof portion is intended to be fitted via said aperture onto the retaining means which is connected pivotably to the fastening element.

Said housing portion 50 comprises a locking means 56 situated inside it and arranged to prevent said resilient positioning means 14, 16 from springing out. Said locking means 56 comprises mutually opposite protrusions 56a, 56b which run internally on the respective sides of the housing portion 50 from the roof portion 52 towards the aperture. These protrusions are situated in the housing portion 50 and so spaced from one another that when the housing portion is fitted onto the retaining means 30 which is connected pivotably to the fastening element 10 the respective protrusions 56a, 56b abut externally against the respective resilient positioning means 14, 16 which are thereby prevented from springing out, with the result that the retaining means and the fastening element are locked in desired mutual set positions because said protrusions 35a, 36a of the rigid positioning means 34 are locked in said recesses 14a, 16a in the respective resilient positioning means.

The fastening device I thus has a locking configuration comprising said locking means 56 and said positioning means 14, 16, 34.

In the above embodiment of the fastening device I, resilient first and second positioning means were described. In an alternative variant the fastening device has only one resilient positioning means and the locking means is arranged to prevent springing out of the resilient positioning means by locking in desired positions against the rigid positioning means.

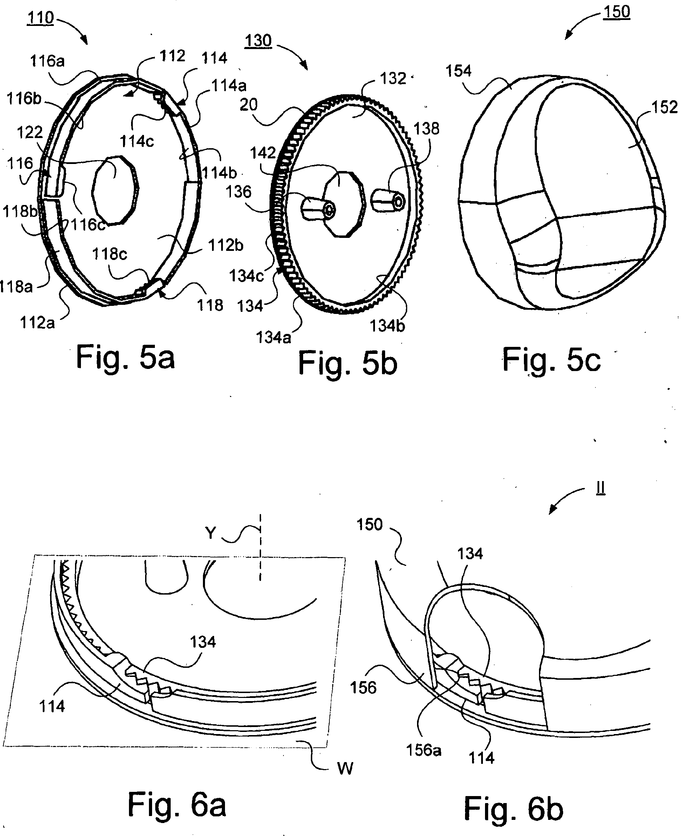

Figs. 5a-c are schematic perspective views of parts of a fastening device II for detector means according to an embodiment of the present invention, and Figs. 6a-c schematic perspective views of parts of the fastening device II in assembled/partly assembled states.

The fastening device II for support of detector means comprises a fastening element 110 for applying it. This fastening element is intended to be fastened on a fastening surface W which in one variant is an inside of a front window of a vehicle.

The fastening element 110 has a platelike portion 112 with a first side 112a suited to being fastened to a fastening surface W, e.g. the inside of a vehicle front window. It further has a second side 112b which is opposite to the first side. The platelike portion 112 is substantially circular.

The fastening element 110 comprises first, second and third resilient positioning means 114, 116, 118 situated close to the periphery of the circular platelike portion 112. These resilient positioning means are adapted to running along the periphery of the platelike portion in an arcuate shape and are placed substantially symmetrically after one another along its periphery. They are situated relative to one another in such a way that they substantially form a border which substantially follows the periphery of the platelike portion.

Each of the resilient positioning means 114, 116, 118 has an end region firmly connected to the platelike portion 112, while the remainder of each of them is allowed to flex/spring relative to the platelike portion in substantially its radial direction of extent.

The respective resilient positioning means 114, 116, 118 have an external side 114a, 116a, 118a and an internal side 114b, 116b, 118b. Each of them has in its end region opposite to the end region which is fastened to the platelike portion 112 respective protruding portions or recesses 114c, 116c, 118c distributed along the internal side.

Said protruding portions or recesses 114c, 116c, 118c take the form in this variant of grooves/elevations with a sawtooth profile which run transversely to the longitudinal extent of the respective positioning means.

Each resilient positioning means 114, 116, 118 is adapted to flexing or springing in a substantially radial direction relative to the platelike portion 112.

The fastening element 110 has for said detector means a viewing aperture 122 situated in the central region of the platelike portion 112. This viewing aperture is thus intended for the detector means, e.g. a camera, and the detector means is intended, when the fastening device II is applied, to be so directed that it can detect through said aperture.

The fastening device II further comprises a retaining means 130 adapted to supporting said detector means.

The retaining means 130 has a platelike portion 132 with a first side 132a and a second side 132b which is opposite to the first side. The platelike portion 132 is substantially circular.

The retaining means 130 comprises a rigid positioning means 134 arranged to run along the periphery of the platelike portion 132. This rigid positioning means is circular and constitutes a circular border along the periphery of the platelike portion 132 of the retaining means 130.

The rigid positioning means 134 has an external side 134a and an internal side 134b and is provided with a plurality of protruding portions or recesses 134c distributed along the external side.

Said protruding portions or recesses 134c take the form in this variant of grooves/elevations with a sawtooth profile which run transversely to the longitudinal extent of the rigid positioning means 134.

The retaining means 130 comprises fastening means 136, 138 for fastening the detector means.

The retaining means 130 has for said detector means a viewing aperture 142 situated in the central region of the platelike portion 132. This viewing aperture is thus intended for the detector means, e.g. a camera, and the detector means is intended, when the fastening device II is applied, to be so directed that it can detect through said aperture.

Said rigid positioning means 134 of the retaining means 130 is arranged to cooperate with said resilient positioning means 114, 116, 118 of the fastening element 110 so that the retaining means is settable to mutual positions relative to the fastening element. Said retaining means 130 is thus pivotable about a pivot axis Y which runs at right angles to the platelike portion 112 of the fastening element in order to set said retaining means in different angular positions relative to said fastening element.

Said rigid positioning means 134 of the retaining means 130 is thus so arranged that its said external side 134a faces towards said internal sides 114b, 116b, 118b of the respective resilient positioning means 114, 116, 118 so that said protruding portions or recesses 134c on the external side of the retaining means cooperate and are put into engagement with opposite protruding portions or recesses 114c, 116c, 118c of the respective resilient positioning means in order to achieve set positions.

The respective resilient positioning means 114, 116, 118 are adapted to flexing/springing out when the retaining means 130 is turned about the pivot axis Y, allowing said rigid positioning means 134 to change position because the respective protruding portions 134c push the resilient positioning means 114, 116, 118 out so that the retaining means 130 can be turned to desired positions relative to the fastening element 110 for desired directions of detection. The detector means may be so arranged that it is directed to detecting in the direction of the pivot axis Y. It may alternatively be arranged to detect in the radial direction or intermediate directions.

The fastening element II comprises a housing portion 150 adapted to accommodating said detector means. This housing portion is thus arranged to enclose said retaining means 130 and said fastening element 110. It has a roof portion 152 and a substantially circular wall portion 154 forming a circular aperture opposite to the roof portion, and the roof portion is intended to be fitted via said aperture onto the retaining means which is connected pivotably to the fastening element.

Said housing portion 150 comprises a locking means 156 situated inside it and arranged to prevent said resilient positioning means 114, 116, 118 from springing out. Said locking means has a lower portion 156a of the wall portion running round inside it. Said lower portion is so configured that when the housing portion is fitted onto the retaining means 130 which is connected pivotably to the fastening element 110 the internal lower portion 156a abuts against the respective resilient positioning means 114, 116, 118 so that they are prevented from springing outwards, with the result that the retaining means and the fastening element are locked in desired mutual set positions because said protruding portions 134c of the rigid positioning means 134 are locked in said recesses 114c, 116c, 118c in the respective resilient positioning means, and vice versa.

The fastening device II thus has a locking configuration comprising said locking means 156 and said positioning means 114, 116, 118, 134.

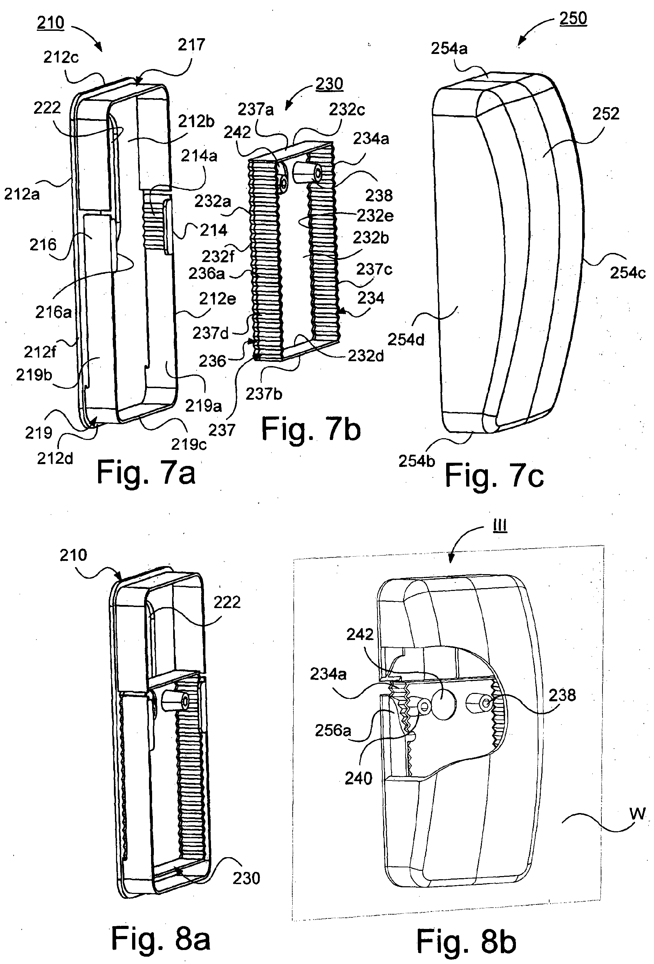

Figs. 7a-c are schematic perspective views of parts of a fastening device III for detector means according to an embodiment of the present invention, and Figs. 8a-b schematic perspective views of the fastening device III in assembled/partly assembled states.

The fastening device III for support of detector means comprises a fastening element 210 for applying it. This fastening element is intended to be fastened on a fastening surface W which in one variant is the inside of a front window of a vehicle.

The fastening element 210 has a platelike portion 212 with a first side 212a adapted to being fastened to a fastening surface W, e.g. the inside of a vehicle front window. This fastening element further has a second side 212b which is opposite to the first side.

The platelike portion 212 is of substantially oblong shape. It has a first end or first short side 212c which ends a first end region, an opposite second end or second short side 212d which ends a second end region, a first long side 212e and a second long side 212f which runs opposite to, parallel with and at a distance from the first long side, which first and second long sides 212e, 212f and first and second short sides 212c, 212d form an edge portion running round the fastening element.

The fastening element 210 comprises first and second resilient positioning means 214, 216, the first 214 situated close to the first long side 212e, and the second 216 close to the second long side 212f. These resilient positioning means are situated opposite one another.

The fastening element 210 comprises a first U-shaped border portion 217 which substantially follows the platelike portion 212 along part of the respective long sides 212e, 212f and along the first short side 212c and is firmly connected to the platelike portion.

The first and second resilient positioning means 214, 216 are comprised by respective arm portions 219a, 219b of a second U-shaped border portion 219 which substantially follows the platelike portion 212 along part of the respective long sides 212e, 212f and along the second short side 212d, the first arm portion 219a being arranged to run along the first long side 212e, and the second arm portion 219b to run along the second long side 212f, of the platelike portion 212, and to flex/spring relative to the platelike portion 212 and towards and away from one another. The second border portion 219 has an intermediate portion 219c firmly connected to the second end region close to the second short end 212d of the platelike portion.

The first and second resilient positioning means 214, 216 have a plurality of protruding portions or recesses 214a, 216a distributed along them.

Each resilient positioning means 214, 216 has an external side and an internal side, and their internal sides face towards one another. Said protruding portions or recesses 214a, 216a are situated on the internal side of the respective resilient positioning means and take the form in this variant of grooves/elevations with a sawtooth profile which run transversely to the longitudinal extent of the respective positioning means.

The fastening element 210 has in the first end region a viewing aperture 222 for said detector means. This viewing aperture is thus intended for the detector means, e.g. a camera, and the detector means is intended, when the fastening device III is applied, to be so directed that it can detect through said aperture, which is oblong in the longitudinal extent of the fastening element.

The fastening device III further comprises a retaining means 230 adapted to supporting said detector means.

The retaining means has a platelike portion 232 with a first side 232a and a second side 232b which is opposite to the first side.

The platelike portion 232 is of substantially oblong shape. It has a first end or first short side 232c which ends a first end region, an opposite second end or second short side 232d which ends a second end region, a first long side 232e and a second long side 232f which runs opposite to, parallel with and at a distance from the first long side.

The retaining means comprises first and second rigid positioning means 234, 236 comprised by a border portion 237 which has a first short side 237a situated close to the first short side 232c of the platelike portion 232, an opposite second short side 237b situated close to the second short side 232d of the platelike portion, a first long side 237c running along the first long side 232e of the platelike portion and an opposite second long side 237d running along the second long side of the platelike portion. Each long side of the border portion 237 of said rigid positioning means 234, 236 has an internal side and an external side, and at least the external side has protruding portions or recesses 234a, 236a which in this variant take the form of grooves/elevations with a sawtooth profile which run transversely to the longitudinal extent of the respective positioning means.

The retaining means 230 has in the first end region a viewing aperture 242 for said detector means. This viewing aperture is thus intended for the detector means, e.g. a camera, which is intended, when the fastening device III is applied, to be so directed that it can detect through said aperture.

The retaining means comprises fastening means 238, 240 for fastening the detector means.

Said rigid positioning means 234, 236 of the retaining means 230 are adapted to cooperating with said resilient positioning means 214, 216 of the fastening element 210 so that the retaining means is movable to mutual set positions relative to the fastening element. Said retaining means can thus be moved in the direction of the longitudinal extent of the fastening device III relative to the fastening element in order to set said retaining means in different positions relative to said fastening element.

Said rigid positioning means 234, 236 are therefore so arranged that the respective external side of the border portion 237 faces towards said internal sides of said respective resilient positioning means 214, 216 so that protruding portions or recesses 234a, 236a on the respective external sides are put into engagement with opposite protruding portions or recessess 214a, 216a of the respective resilient positioning means to achieve set positions.

The respective resilient positioning means 214, 216 are adapted to flexing/springing when the retaining means is moved in the direction of the longitudinal extent of the fastening element 210, allowing said rigid positioning means 234, 236 to change position because the respective protruding portion 234a, 236a pushes the resilient positioning means 214, 216 out, enabling the protrusion to move to desired positions of the retaining means relative to the fastening element for desired directions of detection.

The fastening device III comprises a housing portion 250 adapted to accommodating said detector means. The housing portion 250 is thus arranged to enclose said retaining means 230 and said fastening element 210. It has a roof portion 252 and wall portions 254a, 254b, 254c, 254d forming an aperture opposite to the roof portion 252, and the roof portion 252 is intended to be fitted via said aperture onto the retaining means which is connected pivotably to the fastening element.

Said housing portion 250 comprises a locking means 256 situated inside it and arranged to prevent said resilient positioning means 214, 216 from springing out. Said locking means comprises portions 256a situated inside on the respective sides of the housing portion. Said portions 256a are situated in the housing portion at such a distance from one another that when the housing portion is fitted on the retaining means 230 which is connected movably to the fastening element 210 the respective portions 256a abut externally against the respective resilient positioning means 214, 216 so that the latter are prevented from springing outwards, with the result that the retaining means and the fastening element are locked in desired mutual set positions because said protruding portions 234a, 236a of said rigid positioning means 234, 236 are locked in said recesses 214a, 216a in the respective resilient positioning means.

The fastening device III thus has a locking configuration comprising said locking means 256 and said positioning means.

Embodiments with resilient positioning means situated on the fastening element and rigid positioning means situated on the retaining means were described above. Alternatively, resilient positioning means may be situated on the retaining means and rigid positioning means on the fastening element. This is applicable to all the embodiments of fastening devices I; II; III as above.

## Claims

1. A fastening device (I; II; III) for support of detector means, suited to being fastened to a fastening surface of a vehicle, comprising a fastening element (10; 110; 210) for applying the fastening device, and a retaining means (30; 130; 230) adapted to supporting said detector means, such that the retaining means (30; 130; 230) and the fastening element (10; 110; 210) are arranged to be mutually settable and a locking configuration (56, 14, 16, 34; 156, 114, 116, 118, 134; 256, 214, 216, 234, 236) is provided for mutual locking of the retaining means (30; 130; 230) and the fastening element (10; 110; 210) in set mutual positions, such that both the fastening element (10; 110; 210) and the retaining means (30; 130; 230) comprise positioning means (14, 16, 34; 114, 116, 118, 134; 214, 216, 234, 236) arranged to cooperate in order to define set mutual positions, and either the retaining means or the fastening element is provided with resilient positioning means (14, 16, 114, 116, 118; 214, 216) to effect said cooperation, **characterised by** that the locking configuration comprises a locking means (56; 156; 256) arranged to prevent said resilient positioning means (14, 16, 114, 116, 118; 214, 216) from springing out.

2. A fastening device according to claim 1, such that said cooperation is arranged to take place between respective protruding portions and recesses of said positioning means (14, 16, 34; 114, 116, 118, 134; 214, 216, 234, 236).

3. A fastening device according to claim 1 or 2, such that said resilient positioning means (14, 16, 114, 116, 118; 214, 216) are borne by said fastening element or said retaining means.

4. A fastening device according to any one of claims 1-3, such that said retaining means (30) is pivotable about a pivot axis (X) towards and away from said fastening element (10) in order to set said retaining means (30) in different angular positions relative to said fastening element (10).

5. A fastening device according to claim 4, such that at least one resilient positioning means (14, 16) is arranged protrudingly from a platelike portion (12) of the fastening element (10) transversely to said pivot axis (X), comprising a plurality of protruding portions or recesses (14a, 16a) distributed along the positioning means for cooperation with corresponding protruding portions or recesses (35a, 36a) on at least one rigid positioning means (34) of the retaining means (30).

6. A fastening device according to any one of claims 1-3, such that said retaining means (130) is turnable about a pivot axis (Y) which runs torwards a platelike portion (112) of the fastening element (110), that there is at least one resilient positioning means (114, 116) running in the circumferential direction of the fastening element (110), and that at least one rigid positioning means (134) running in the circumferential direction of the retaining means (130) bears protruding portions or recesses (134c) distributed in the circumferential direction.

7. A fastening device according to any one of claims 1-3, such that said retaining means (230) is movable along a platelike portion (212) of the fastening element (210), that there is at least one resilient positioning means (214, 216) running along the fastening element (210) in the direction of movement of the retaining means (230) and that there is at least one rigid positioning means (234, 236) which runs along the fastening element (230) in its direction of movement and bears protruding portions or recesses (234a, 236a) distributed in said direction of movement.

8. A fastening device according to claim 1, in which said locking means (56; 156; 256) is comprised by a protective housing portion (50; 150; 250) of the fastening device (I; II; III).

9. A fastening device according to any one of claims 1-8, such that there are necessary viewing apertures (22, 42; 122, 142; 222, 242) for said detector means when the fastening device (I; II; III) is in an applied state.

10. A motor vehicle (1) provided with a fastening device (I; II; III) according to any one of claims 1-9.

11. A motor vehicle according to claim 10, such that said fastening device (I; II; III) is intended to be applied to the inside of the vehicle's front window (W).

## Patentansprüche

1. Befestigungsvorrichtung (I; II; III) zur Unterstützung von Detektormitteln, die dazu geeignet ist, an einer Befestigungsoberfläche eines Fahrzeugs befestigt zu werden, umfassend ein Befestigungselement (10; 110; 210) zum Anbringen der Befestigungsvorrichtung, und ein Haltemittel (30; 130; 230), das zur Unterstützung der Detektormittel geeignet ist, so dass das Haltemittel (30; 130; 230) und das Befestigungselement (10; 110; 210) zueinander einstellbar angeordnet sind, und eine Verriegelungskonfiguration (56, 14, 16, 34; 156, 114, 116, 118, 134; 256, 214, 216, 234, 236), die zur gegenseitigen Verriegelung des Haltemittels (30; 130; 230) und des Befestigungselements (10; 110; 210) in bestimmten gegenseitigen Positionen bereitgestellt ist, wobei das Befestigungselement (10; 110; 210) und das Haltemittel (30; 130; 230) Positioniermittel (14, 16, 34; 114, 116, 118, 134; 214, 216, 234, 236) umfassen, die dazu ausgebildet sind, um die eingestellten gegenseitigen Positionen zu definieren, und wobei entweder das Haltemittel oder das Befestigungselement mit einem elastischen Positioniermittel (14, 16, 114, 116, 118; 214, 216) versehen ist, um die Wechselwirkung zu bewirken, **dadurch gekennzeichnet, dass** die Verriegelungskonfiguration ein Verriegelungsmittel (56; 156; 256) umfasst, das dazu ausgebildet ist, das Herausspringen des elastischen Positioniermittels (14, 16, 114, 116, 118; 214, 216) zu verhindern.

2. Befestigungsvorrichtung nach Anspruch 1, wobei die Wechselwirkung dazu ausgebildet ist, zwischen einzelnen hervorstehenden Abschnitten und Vertiefungen des Positioniermittels (14, 16, 34; 114, 116, 118, 134; 214, 216, 234, 236) zu erfolgen.

3. Befestigungsvorrichtung nach Anspruch 1 oder 2, wobei das elastischen Positioniermittel (14, 16, 114, 116, 118; 214, 216) von dem Befestigungselement oder dem Haltemittel getragen werden.

4. Befestigungsvorrichtung nach einem der Ansprüche 1 bis 3, wobei das Haltemittel (30) um die Drehachse (X) zu dem Befestigungselement hin und von diesem weg drehbar ist, um das Haltemittel (30) in verschiedene Winkellagen relativ zu dem Befestigungselement (10) einzustellen.

5. Befestigungsvorrichtung nach Anspruch 4, wobei mindestens ein elastisches Positioniermittel (14, 16) hervorstehend von einem plattenförmigen Abschnitt (12) des Befestigungselements (10) quer zu der Drehachse (X) ausgebildet ist, umfassend eine Vielzahl von hervorstehenden Abschnitten oder Vertiefungen (14a, 16a), die entlang dem Positioniermittel für die Wechselwirkung mit dazugehörigen hervorstehenden Abschnitten oder Vertiefungen (35a, 36a) an mindestens einem starren Positioniermittel (34) des Haltemittels (30) verteilt sind.

6. Befestigungsvorrichtung nach einem der Ansprüche 1 bis 3, wobei das Haltemittel (130) drehbar um die Drehachse (Y) ist, die in Richtung des plattenförmigen Abschnitts (112) des Befestigungselements (110) verläuft, dass dort mindestens ein elastisches Positioniermittel (114, 116) in umlaufender Richtung des Befestigungselements (110) verläuft, und dass mindestens ein starres Positioniermittel (134), das in umlaufender Richtung der Haltemittel (130) verläuft, hervorstehende Abschnitte oder Vertiefungen (134c) stützt, die in umlaufender Richtung verteilt sind.

7. Befestigungsvorrichtung nach einem der Ansprüche 1 bis 3, wobei das Haltemittel (230) entlang eines plattenförmigen Abschnitts (212) des Befestigungselements (210) beweglich sind, dass dort mindestens ein elastisches Positioniermittel (214, 216) entlang des Befestigungselements (210) in Richtung der Bewegung des Haltemittels (230) verläuft, und dass dort mindestens ein starres Positioniermittel (234, 236) vorgesehen ist, das entlang des Befestigungselements (230) in seiner Bewegungsrichtung verläuft und hervorstehende Abschnitte und Vertiefungen (234a, 236a) stützt, die entlang der Bewegungsrichtung verteilt sind.

8. Befestigungsvorrichtung nach Anspruch 1, wobei das Verriegelungsmittel (56; 156; 256) von einem Schutzgehäuseabschnitt (50; 150; 250) der Befestigungsvorrichtung (I; II; III) umfasst wird.

9. Befestigungsvorrichtung nach einem der Ansprüche 1 bis 8, wobei notwendige Sichtöffnungen (22, 42; 122, 142; 222, 242) für die Detektormittel vorgesehen sind, wenn die Befestigungsvorrichtung (I; II; III) in Anwendung ist.

10. Kraftfahrzeug (1), ausgestattet mit einer Befestigungsvorrichtung (I; II; III) nach einem der Ansprüche 1 bis 9.

11. Kraftfahrzeug nach Anspruch 10, wobei die Befestigungsvorrichtung (I; II; III) dazu bestimmt ist, an der Innenseite der Windschutzscheibe (W) des Fahrzeugs angebracht zu werden.

## Revendications

1. Dispositif de fixation (I ; II ; III) pour le support de moyens formant détecteurs, apte à être fixé sur une surface de fixation d'un véhicule, comprenant un élément de fixation (10 ; 110 ; 210) pour appliquer le dispositif de fixation, un moyen de retenue (30 ; 130 ; 230) apte à supporter lesdits moyens formant détecteurs, de telle sorte que le moyen de retenue (30 ; 130 ; 230) et l'élément de fixation (10 ; 110 ; 210) sont agencés de façon à pouvoir être réglés mutuellement, et une configuration de verrouillage (56, 14, 16, 34 ; 156, 114, 116, 118, 134 ; 256, 214, 216, 234, 236) étant prévue pour un verrouillage mutuel du moyen de retenue (30 ; 130 ; 230) et de l'élément de fixation (10 ; 110 ; 210) dans des positions mutuelles établies, de telle sorte qu'à la fois l'élément de fixation (10 ; 110 ; 210) et le moyen de retenue (30 ; 130 ; 230) sont pourvus de moyens de positionnement (14, 16, 34 ; 114, 116, 118, 134 ; 214, 216, 234, 236) agencés pour coopérer afin de déterminer des positions mutuelles établies, et soit le moyen de retenue, soit l'élément de fixation est pourvu de moyens de positionnement élastiques (14, 16, 114, 116, 118; 214, 216) pour effectuer ladite coopération, **caractérisé en ce que** la configuration de verrouillage comprend un moyen de verrouillage (56 ; 156 ; 256) agencé pour éviter l'éjection desdits moyens de positionnement élastiques (14, 16, 114, 116, 118 ; 214, 216).

2. Dispositif de fixation selon la revendication 1, dans lequel ladite coopération est agencée pour s'opérer entre des parties en saillie et évidements respectifs desdits moyens de positionnement (14, 16, 34 ; 114, 116, 118, 134 ; 214, 216, 234, 236).

3. Dispositif de fixation selon la revendication 1 ou 2, dans lequel lesdits moyens de positionnement élastiques (14, 16, 114, 116, 118 ; 214, 216) sont supportés par ledit élément de fixation ou ledit moyen de retenue.

4. Dispositif de fixation selon l'une quelconque des revendications 1 à 3, dans lequel ledit moyen de retenue (30) peut pivoter autour d'un axe de pivotement (X) en direction de et à l'opposé dudit élément de fixation (10) afin de régler ledit moyen de retenue (30) dans différentes positions angulaires par rapport audit élément de fixation (10).

5. Dispositif de fixation selon la revendication 4, dans lequel au moins un moyen de positionnement élastique (14, 16) est disposé en saillie à partir d'une partie en forme de plaque (12) de l'élément de fixation (10) transversalement audit axe de pivotement (X), comprenant une pluralité de parties en saillie ou d'évidements (14a, 16a) répartis le long du moyen de positionnement pour coopérer avec des parties en saillie ou évidements (35a, 36a) correspondants sur au moins un moyen de positionnement rigide (34) du moyen de retenue (30).

6. Dispositif de fixation selon l'une quelconque des revendications 1 à 3, dans lequel ledit moyen de retenue (130) peut tourner autour d'un axe de pivotement (Y) s'étendant en direction d'une partie en forme de plaque (112) de l'élément de fixation (110), au moins un moyen de positionnement élastique (114, 116) s'étend dans la direction circonférentielle de l'élément de fixation (110) et au moins un moyen de positionnement rigide (134) s'étendant dans la direction circonférentielle du moyen de retenue (130) présente des parties en saillie ou évidements (134c) répartis dans la direction circonférentielle.

7. Dispositif de fixation selon l'une quelconque des revendications 1 à 3, dans lequel ledit moyen de retenue (230) est déplaçable le long d'une partie en forme de plaque (212) de l'élément de fixation (210), au moins un moyen de positionnement élastique (214, 216) s'étend le long de l'élément de fixation (210) dans la direction de mouvement du moyen de retenue (230) et au moins un moyen de positionnement rigide (234, 236) s'étend le long de l'élément de fixation (230) dans la direction de son mouvement et présente des parties en saillie ou évidements (234a, 236a) répartis dans ladite direction de mouvement.

8. Dispositif de fixation selon la revendication 1, dans lequel ledit moyen de verrouillage (56 ; 156 ; 256) comprend une partie de capot de protection (50 ; 150 ; 250) du dispositif de fixation (I ; Il ; III).

9. Dispositif de fixation selon l'une quelconque des revendications 1 à 8, dans lequel sont prévues des ouvertures d'observation (22, 42 ; 122, 142 ; 222, 242) pour lesdits moyens formant détecteurs lorsque le dispositif de fixation (I ; Il ; III) est à l'état appliqué.

10. Véhicule à moteur (1) équipé d'un dispositif de fixation (I ; II ; III) selon l'une quelconque des revendications 1 à 9.

11. Véhicule à moteur selon la revendication 10, dans lequel ledit dispositif de fixation (I ; Il ; III) est destiné à être appliqué à l'intérieur de la vitre avant (W) du véhicule.
